# EUROPEAN PATENT SPECIFICATION

(11) **EP 4 452 906 B1**
(45) Date of publication and mention of the grant of the patent: **10.12.2025**
(21) Application number: 22840678.1
(22) Date of filing: 20.12.2022
(51) Int. Cl.: C05F 3/00, C05F 5/00, C05F 17/10, C05F 17/20, C05F 17/50

(54) **METHOD FOR THE PRODUCTION OF A HUMIC AND FULVIC ACID BASED BIOSTIMULANT AND FERTILISER**
VERFAHREN ZUR HERSTELLUNG EINES HUMIN- UND FULVINSÄUREBASIERTEN BIOSTIMULANS UND DÜNGEMITTEL
PROCÉDÉ DE PRODUCTION D'UN BIOSTIMULANT ET D'UN ENGRAIS À BASE D'ACIDE HUMIQUE ET FULVIQUE

(30) Priority: 21.12.2021 LU 501059
(43) Date of publication of application: 30.10.2024
(73) Proprietor: Luxembourg Institute of Science and Technology, 4362 Esch-sur-Alzette (LU)
(72) Inventor: ROUSSEL, Jimmy, 4362 Esch-Sur-Alzette (LU); ADAM, Gilles, 4362 Esch-sur-Alzette (LU)
(74) Representative: IPAZ
(86) International application number: PCT/EP2022/086894
(87) International publication number: WO 2023/118073

(56) References cited:
- WO-A1-2021/173978
- US-B1- 6 168 642
- CRISTINA GIULIO ET AL: "Recovery of humic acids from anaerobic sewage sludge: Extraction, characterization and encapsulation in alginate beads", INTERNATIONAL JOURNAL OF BIOLOGICAL MACROMOLECULES, ELSEVIER BV, NL, vol. 164, 14 July 2020 (2020-07-14), pages 277 - 285, XP086335508, ISSN: 0141-8130, [retrieved on 20200714], DOI: 10.1016/J.IJBIOMAC.2020.07.097

## Description

### FIELD OF THE INVENTION

The invention belongs to the field biostimulants and fertilizers useful in agriculture.

More particularly, the invention relates to a method for the production of an aqueous liquid composition comprising humic substances produced by the anaerobic decomposition of organic matters and to the use of an aqueous liquid composition comprising humic substances obtained according to this method, in particular as plant biostimulant and/or fertilizer in organic farming.

### TECHNICAL BACKGROUND

Humic substances are naturally-occurring organic compounds produced in soils by the decomposition of organic matter. Humic substances are one of the main components of lignites, soil, and peat. Humic substances contain fulvic acids, humic acids and humins. In soil, these substances are active and provide numerous benefits for plants.

More precisely, humic substances modify the characteristics of soil and improve growth and health of the most varied agricultural crops both by soil treatment and/or by leaf application.

In particular, humic substances improve:
- Soil water retention capacity
- Soil structure and fertility; by virtue of the chelating effect of the functional groups present in humic substances, the macro- and micronutrients (iron, calcium, phosphorus, etc.) are prevented from being washed away. Their availability is then increased over time to the advantage of the plant growth and health. Humic and fulvic substances change plant primary and secondary metabolism. Humic substances enhance root growth, nutrient uptake and crop tolerance to environmental stresses (Canellas et al., Sci. Hortic. (Amsterdam), 2015, 196, 15-27; Van Oosten et al., Chem. Biol. Technol. Agric., 2017, 4, 5).

Humic substances are naturally produced by the biodegradation of organic matter and are composed of a mixture of acids containing phenolate and carboxyl groups. Humic substances can be divided in three main acids group: fulvic acid, humic acid and humins. Fulvic acids have a higher oxygen content and a lower molecular weight than humic acids. Humic acids precipitate at a pH lower than 1.8 whereas fulvic acids stay soluble at any pH. Finally, humins are insoluble at acid pH and at basic pH. A number of examples exist indicating the potential for these substances to improve abiotic stress resistance in plants.

Humic substances, including fulvic and humic acids, are also widely found in fossil deposits of lignite and leonardite. Extracting humic substances from natural resources has proved to be complex and problematic, especially for non fossil deposits. Extraction and concentration of humic substances are generally done using their respective solubility at different pH. They require the use of large amounts of acids and bases to leech and precipitate the desired components, and often involve many complex and energy intensive processes.

As an example, International Application WO2013/152943 describes a method for the extraction of humic substances using large amounts of chemical products and with high energy consumption. According to another method, as described for example in US 3,398,186, extraction and concentration of humic substances employ resources from fossil deposits of leonardite, lignite, coal, etc... GIULIO ET AL, International Journal of Biological Macromolecules, vol.164, pages 277-285 discloses a method of producing an aqueous liquid comprising humic substances from sewage sludge.

It appears obvious that a need exists for a low-cost and eco-friendly extraction and concentration method for obtaining humic and fulvic acids from renewable natural resources and not from fossil deposits and in which the use of acids and bases may be avoided or considerably reduced.

It is with the aim of achieving this objective that the inventors have developed the method which is the subject of the present invention.

### DESCRIPTION OF THE INVENTION

A first object of the present invention is a method for the production of an aqueous liquid composition comprising at least humic substances dissolved therein, said process comprising at least the following steps:
(i) an anaerobic digestion of organic matters comprising incubating said organic matters, in an anaerobic atmosphere, in the presence of an anaerobic microorganism population chosen in the group comprising humic acid-producing microorganisms, fulvic acid-producing microorganisms and mixtures thereof, for a period of time of at least 40 days, to produce a liquid sludge comprising dissolved humic substances and solid particles;
(ii) a mechanical separation of the solid particles from the humic substances with a solid-liquid separator to obtain a solid fraction and a liquid fraction comprising at least said humic substances and said microorganism population;
(iii) ultrafiltration of said liquid fraction on an ultrafiltration membrane having a molecular weight cut off selected in the range of 25 to 1,000 kDa inclusively, for removing colloidal organic matters and inorganic precipitates from said liquid fraction and obtaining a liquid permeate comprising humic substances;
(iv) concentrating said liquid permeate comprising humic substances using a reverse osmosis membrane to obtain a retentate in the form of an aqueous liquid composition comprising at least humic substances dissolved therein,
and wherein each of steps (i) to (iv) is carried out at a pH ≥ 2.

The method according to this invention uses less (or even none) chemical reagents to produce and concentrate humic substances, whereas usual processes require large amounts of acids and bases to extract and concentrate the humic substance from fossil stock such as leonardite.

The method according to this invention is also more ecological. First, the feedstocks of the process are based on organic waste such as manure, municipal organic waste, energy crops, crop residues, food industry waste whereas other technologies use fossil stocks to extract humic substances. Secondly, the method according to this invention produces energy during anaerobic digestion that can be re-used at a different step of the method. Very little energy and chemical products are necessary compared to classical humic substances extraction and concentration processes.

In the sense of the present invention, an "anaerobic digestion" is a sequence of processes by which microorganisms break down biodegradable material in the absence of oxygen. This step is of importance in the way that organic matters are at least partly digested and degraded into humic substances and biogas.

In the sense of the present invention, colloidal organic matters and inorganic precipitates are particles having a size comprised between about 80 nm and 1 mm.

According to the invention, the nature of organic matters is not critical. Organic matters may for example be selected in the group comprising animal slurry, manure, crops, crop residues, food industry waste, agriculture and gardening waste, cardboard, cellulosic material, coffee grounds, algae, and mixtures thereof.

According to a preferred embodiment of the present invention, among these organic matters, those that are fibrous, in particular ligno-cellulosic material, are preferred because their degradation products are the main source of the humic substances.

According to the invention, the anaerobic microorganism population can be naturally present in the organic matters used in step (i) and/or added to the organic matters.

The anaerobic microorganism population may comprise mesophilic bacteria and/or thermophilic bacteria.

Examples of mesophilic bacteria are *Proteobacteria sp., Trichococcus sp., Cloacimonates sp., Methanosaeta concilii, Methanosarcina barkeri, Petrimonas, sphaerochaeta, Clostridium sp., Bacteroidetes sp., Firmicutes sp., Clostidioides difficile, Proteobacteria sp..* Examples of thermophilic bacteria are *Methanoculleus thermophilus, Methanothermobacter sp., Tepidanaerobacter sp., Thermotogae sp., Caldicoprobacter sp..*

According to a particular embodiment of the invention, said anaerobic microorganism population comprises mesophilic bacteria and said step (i) is carried out at a temperature selected in the range of about 18 to 45°C inclusively, preferably in the range of about 35 to 42 C° inclusively.

According to another particular embodiment of the invention, said anaerobic microorganism population comprises thermophilic bacteria and said step (i) is carried out at a temperature selected in the range of about 45 to 90°C inclusively, preferably in the range of about 50 to 60 C° inclusively.

The duration of the anaerobic digestion ranges preferably between about 40 and 80 days inclusively, more preferably between 60 to 80 days.

The mechanical separation of the solid particles from the humic substances with a solid-liquid separator at step (ii) can be carried out with any material allowing the separation of a solid fraction from a liquid fraction and well known from one skilled in the art. As examples of solid-liquid separators, it may be mentioned centrifugal devices and in particular a decanter-centrifuge or a discontinuous centrifuge, a screw press, filters and in particular a belt-filter, and screens.

The solid fraction recovered at the end of step (ii) of mechanical separation comprises solid undigested particles, in particular solid particles of ligno-cellulosic material. Said solid particles may be exposed to a thermal alkali-treatment to at least partially degrade said ligno-cellulosic material and solubilize organic matters and humic substances.

In that case, the solid particles issued from said thermal alkali-treatment can be mixed with the organic matters of step (i) to be anaerobically digested once again. The addition of the solid particles issued from said thermal alkali-treatment into the organic matters results in a more degraded and stable form of said organic matters and in an enhancement of the amount of humic substances recovered at the end of step (i).

The thermal alkali-treatment can be carried out at a temperature selected in the range of 20 to 80°C inclusively. The duration of the alkali treatment may vary for example between about 2 and 8 hours, preferably between 5 and 6 hours. The alkali treatment can for example be carried out by adding to the solid particles issued from the step (ii) of mechanical separation an alkali product, preferably in a weight ratio of about 2 to 10 % relative to the weight of solid particles.

The solid particles recovered at the end of step (ii) of mechanical separation and/or after the thermal alkali-treatment may be used as soil conditioner and fertilizer.

The liquid fraction recovered at the end of step (ii) of mechanical separation comprises dissolved organic substances, and in particular humic substances. This liquid fraction may also comprise various dissolved organic compounds such as phosphorus-containing compounds, potassium-containing compounds and nitrogen-containing compounds, but also minerals and micronutrients and the microorganism population.

According to a particular embodiment of the invention, the method further comprises after step (ii) of mechanical separation and before step (iii) of ultrafiltration, an additional step of heating the liquid fraction issued from step (ii) to a temperature ranging between 20 and 40°C inclusively, preferably between 30 and 40°C inclusively. This additional heating step eases the further step of ultrafiltration of the liquid fraction by decreasing its viscosity.

Any ultrafiltration membrane having a molecular weight cut off selected in the specified range of 25 to 1,000 kDa inclusively can be used to carry out step (iii) of the method of the invention.

According to Van der Bruggen *et al.* (Van der Bruggen, B.; Vandecasteele, C.; Van Gestel, T.; Doyen,W.; Leysen, R. A review of pressure-driven membrane processes in wastewater treatment and drinking water production. Environ. Prog. 2003, 22, 46-56), ultrafiltration membranes have pore sizes between 2 and 100 nm which are able to retain molecules with molecular weights ranging from 350,000 to 1000 Da. According to Strathmann (Strathmann, H. Membrane separation processes: Current relevance and future opportunities. AIChe J. 2001, 47, 1077-1087 2001), the separation is determined by the pore size-range of the membrane, which is mainly related to its molecular weight cut-off (MWCO), and to a lesser extent to molecular shape, charge and hydrophobicity. Typically, a membrane's MWCO refers to the smallest average molecular mass of a known solute that will not effectively diffuse across the membrane.

The properties of the membrane are nevertheless important in order to favour the permeation of fulvic acids and to selectively retain other organic substances by their molecular weight. With a high molecular weight cut off between 25 and 100 kDa permeation of humic acids is favoured. With a small molecular weight membrane cut off, mainly fulvic-like substances are able to permeate through the membrane. According to a particular and preferred embodiment of the present invention, the ultrafiltration membrane has a molecular weight cut off of 25 to 50 kDa inclusively to recover all the fulvic acids and small/medium size humic acids. When an ultrafiltration membrane having a molecular weight cut off of 25 to 50 kDa is used, the advantage is also that the liquid permeate recovered at the end of step (iii) is sterile, the anaerobic microorganism population being then too large to pass through the pores of the ultrafiltration membrane.

According to a preferred embodiment of the present invention, the ultrafiltration membrane used at step (iii) is a dynamic rotary ultrafiltration system composed of two ultrafiltration membrane units each comprising several assemblies of ceramic disks.

Step (iii) of ultrafiltration is generally conducted at a temperature comprised between about 10 and 45°C inclusively, and preferably at a temperature of 20 to 40°C inclusively.

A pressure applied during the step of ultrafiltration can be comprised between about 100 and 500 kPa inclusively, and preferably between about 100 and 250 kPa inclusively.

The liquid retained by the ultrafiltration membrane (retentate of the ultrafiltration step (iii)) is a concentrated liquid enriched in phosphorus, potassium, nitrogen and organic matters and can also be used as a fertilizer.

Step (iv) of the method according to the invention allows the concentration of the humic substances in the liquid permeate recovered at the end of step (iii).

The reverse osmosis membrane used at step (iv) of the method according to the invention preferably has a molecular weight cut off ranging from about 0.1 to 1 nm inclusively, and more preferably from about 0.5 to 0.8 nm inclusively.

According to a preferred embodiment, step (iv) is carried out at a pressure ranging from about 800 to 1,600 kPa inclusively.

According to another preferred embodiment, the liquid permeate obtained at step (iii) is passed through said reverse osmosis membrane at least twice. In that case, the permeate of the reverse osmosis membrane can be reintroduced into the reverse osmosis membrane via a recycle loop.

According to another embodiment said liquid permeate is passed through a first reverse osmosis membrane at least once, preferably at a pressure ranging from about 1,200 to 1,600 kPA inclusively, and then through a second reverse osmosis membrane at least once, preferably at a pressure ranging from about 800 to 1,200 kPa inclusively. According to this embodiment, at least a part of the liquid permeate obtained at step (iii) is passed through said reverse osmosis membrane at least twice before being passed through a second reverse osmosis membrane. In that case, the permeate of the reverse osmosis membrane is reintroduced into the reverse osmosis membrane via a recycle loop.

Step (iv) is generally conducted at ambient temperature, i.e. at a temperature comprised between about 18 and 25°C inclusively, and preferably at a temperature of 20 to 22°C inclusively.

Step (iv) is also generally conducted with a flow rate ranging from about 4,000 to 20,000 L/hour, preferably from about 10,000 to 14,000 L/hour.

As mentioned above, each step (i) to (iv) of the method according to the invention is carried out at a pH ≥ 2. For each step, said pH is preferably comprised between about 2 end 9 inclusively and more preferably close to 7 (± 1).

According to a particular embodiment of the invention, the method comprises, after step (iv) at least one additional step (iv') of further concentrating the retentate obtained at step (iv) by drying and/or evaporation. The evaporation can be realized using any drying system. In that case, said retentate may be evaporated at a pressure selected in the range of about 10 to 30 kPa inclusively, and at a temperature selected in the range of about 70 to 95°C inclusively.

In that embodiment, ammonia nitrogen and hydrogeno-carbonate that might be present in the retentate issued from step (iv) are removed during the drying process.

At the end of step (iv'), the concentration of humic substances in the retentate after step (iv') may range from about 2 to 12 weight %. It is also possible to concentrate the retentate, i.e. to dry the liquid of the retentate, until a solid product is obtained.

In addition to humic substances, the retentate obtained at the end of step (iv) or at the end of step (iv') when step (iv') is carried out further comprises minerals and nutrients, especially ammonia nitrogen, macronutrients (K, Ca, Na, Mg) and micronutrients (Mo, Cu, Mn, Fe, Zn).

According to another particular embodiment of the invention, the method comprises, after step (iv) or after step (iv') when step (iv') is carried out, a further step of separation of humic acids from fulvic acids by acidification of the retentate at a pH ≤ 1.5 to precipitate humic acids. The acidification of the retentate can be made with a strong acid, preferably sulphuric or nitric acid, to a pH of between 1 and 1.5. With such treatment, humic acids are precipitated whereas fulvic acids stay soluble. The acidified liquid can then be decanted, centrifuged and filtered. The precipitated solids mainly composed of humic acids are then dried. The filtered liquid contains the fulvic acids and micronutrients. The pH of the filtered liquid can then be corrected to a pH between 6 and 8, preferably to a pH between 6.5 and 7.5. That liquid can also be dried to the desired concentration in fulvic acids and dry matter.

A second object of the present invention is the use of a liquid composition comprising at least humic substances dissolved therein, said composition being obtained by the method according to the invention, in organic farming, in particular as plant biostimulant and/or fertilizer.

According to the generally admitted definition, a plant biostimulant is any substance or microorganism applied to plants with the aim to enhance nutrition efficiency, abiotic stress tolerance and/or crop quality traits, regardless of its nutrients content. By extension, plant biostimulants also designate products containing mixtures of such substances and/or microorganisms.

### FIGURES

Further advantages and aspects of the method of the invention could be deducted from the description of the embodiments presented in the example part below, with reference to the accompanying drawings, in which:
- Figure 1 is a schematic view of an example of an industrial-scale pilot installation that can be used for carrying out the method according to the invention.
- Figure 2 is a graph representing the concentration of fulvic-like substances in a liquid fraction recovered after a liquid/solid separation step and in the retentate of the reverse osmosis (fulvic acid-like substance solutions) during the carrying out of the method of the invention;
- Figure 3 is a 2D fluorescence spectroscopy graph for an initial solution with an excitation at 380 nm;
- Figure 4 is a 2D fluorescence spectroscopy graph for an initial solution with an excitation at 340 nm;
- Figure 5 is a 2D fluorescence spectroscopy graph for an initial solution with an excitation at 240 nm;
- Figure 6 is a 2D fluorescence spectroscopy graph for FAL solutions with an excitation at 330 nm;
- Figure 7 is a 2D fluorescence spectroscopy graph for FAL solutions with an excitation at 240 nm;
- Figure 8 is a 2D fluorescence spectroscopy graph for FAL solutions with an excitation at 380 nm;
- Figure 9 is a 2D fluorescence spectroscopy graph for FA1 fraction of the FAL solution with an excitation at 340 nm;
- Figure 10 is a 2D fluorescence spectroscopy graph for FA2 fraction of the FAL solution with an excitation at 340 nm;
- Figure 11 is a 2D fluorescence spectroscopy graph for FA3 fraction of the FAL solution with an excitation at 340 nm;
- Figure 12 is a 2D fluorescence spectroscopy graph for FA1 fraction of the FAL solution with an excitation at 240 nm;
- Figure 13 is a 2D fluorescence spectroscopy graph for FA2 fraction of the FAL solution with an excitation at 240 nm;
- Figure 14 is a 2D fluorescence spectroscopy graph for FA3 fraction of the FAL solution with an excitation at 240 nm;

### EXAMPLES:

### Example 1: Description of a pilot installation for carrying out the method of the present invention

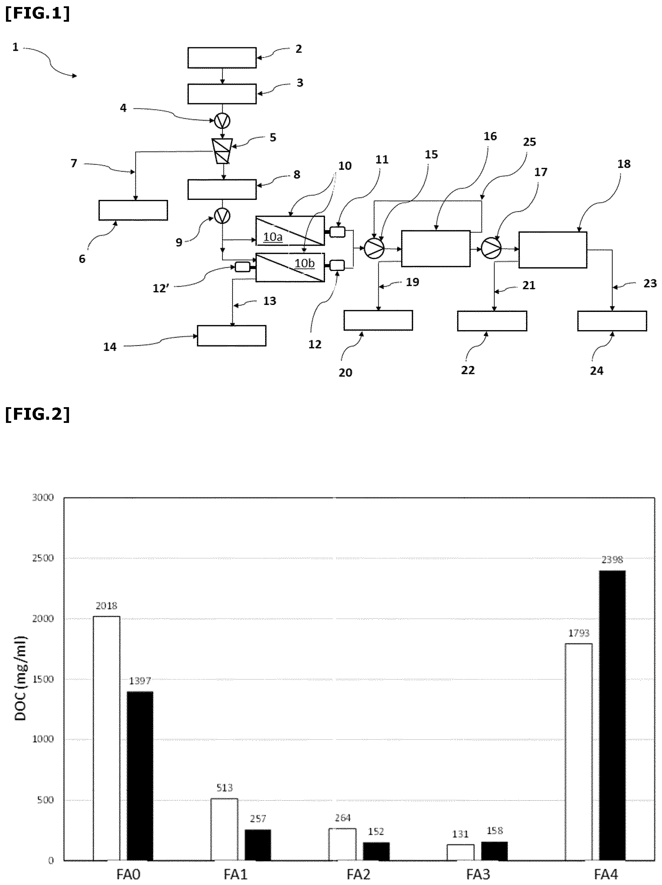

The production of an aqueous composition comprising humic substances according to the method of the present invention can be carried out on an industrial-scale pilot installation **1** as schematically represented on annexed Figure 1. The installation 1 comprises a storage container **2** for organic matters linked to a treatment unit **3** where step (i) of anaerobic digestion of organic matters is performed to produce a liquid organic sludge comprising dissolved humic substances and solid particles. The treatment unit **3** may have an input treatment capacity of up to 2,000 kg h⁻¹. The liquid organic sludge resulting from the anaerobic digestion is then pumped with a peristaltic pump **4** and directed toward a solid-liquid separator **5,** such as a screw press, in order to mechanically separate the solid particles from the liquid and to obtain a solid fraction which can then be stored in a container **6** via a conduct **7.** The liquid fraction issued from the solid-liquid separator **5** is then directed toward a storage container **8.** The container **8** may be equipped with a device, for example with a resistance (not represented), to heat the liquid fraction to a temperature of about 40°C. The liquid fraction, optionally heated, is then sent to a dynamic ultrafiltration system **10** thanks to a peristaltic pump **9.** The dynamic ultrafiltration system **10** is composed of two ultrafiltration membrane units **10a** and **10b** (for example the system sold under the name BioBooster MFU by the company Grundfos, The Netherlands), each equipped with five rotary ceramic disc ultrafiltration membranes wagons (not represented). The first ultrafiltration membrane unit **10a** is equipped with one electric motor **11** to gear the five rotary ceramic disc ultrafiltration membranes wagons whereas the second ultrafiltration membrane unit **10b** is equipped with two electrical motors **12, 12'** to gear a group of two rotary ceramic disc ultrafiltration membranes wagons on one side and a group of three rotary ceramic disc membranes wagons on the other side of the second ultrafiltration membrane unit **10b.** The liquid fraction is ultrafiltered using this dynamic ultrafiltration system **10** operating at a pressure of 100-250 kPa and without recirculation. Retentates of both ultrafiltration membrane units **10a** and **10b** are sent to a storage tank **14** via a conduct 13 whereas the permeates of both ultrafiltration membrane units **10a** and **10b** are sent to a first module of reverse osmosis **16** using a pump **15.** The permeate of the first module of reverse osmosis **16** is sent to a second module of reverse osmosis **18** using a pump **17.** Permeate of the first module of reverse osmosis **18** may also be recirculated through the first module of reverse osmosis **18** via a retentate recycle loop **25** and the pump **15.** The retentate of the first reverse osmosis module **16,** corresponding to the aqueous composition of the humic substances is sent to a storage tank **20** via a conduct **19** whereas the retentate of the second reverse osmosis module **18** is sent to a storage tank **22** via a conduct **21.** Finally, the permeate of the second module of reverse osmosis **18,** and corresponding to the discharge water, is sent to a storage tank **24** via a conduct **23.** Optionally, the installation **1** may comprise a storage tank of permeates of the ultrafiltration modules **10a** and **10b,** said storage tank being interposed between said ultrafiltration modules **10a** and **10b** and said first reverse osmosis module **16** (not represented).

### Example 2: Production of an aqueous composition comprising humic substances according to the method of the invention

An aqueous composition comprising humic substances has been prepared using the pilot installation **1** described above in example 1 and on figure 1. This pilot installation **1** had an installed electrical capacity of 600 kW and able to manage 10,000 tons/year of organic matters composed for example of agricultural residues, maize silage, chicken manure and various wastes from food industry.

The treatment unit **3** was charged with 1,250 kg/hour of a mixture of organic matters composed of crop residues, chicken manure and waste from the food industry. An anaerobic digestion was performed in an anaerobic atmosphere for 70 days in the presence of a mixture of humic acid-producing microorganisms and fulvic acid-producing microorganisms naturally present in the mixture of organic matters. The pilot installation **1** was designed to process a liquid organic sludge input of up to 2,000 kg/hour. At the end of the anaerobic digestion, part the liquid organic sludge has been sent to a screw press at an input of up to 2,000 kg/hour **5** and then to a storage container **8** heated at a temperature of 40°C. The heated liquid fraction was then sent to the ultrafiltration membrane units **10a** and **10b.** For the ultrafiltration step, ceramic discs with a pore size of 5 nm, a diameter of 374 mm and a surface of 0.2 m³/disc were installed. Each ultrafiltration membrane unit **10a** and **10b** was equipped with 5 wagons of 36 discs for a total filtration area of 34 m². Ultrafiltration was performed at a pressure of 100-250 kPa.

Retentates of both modules **10a** and **10b** were sent to a storage tank **14** whereas permeates were stored in a buffer tank (not represented), prior to the reverse osmosis filtration steps. From a research perspective, retentates of both modules **10a** and **10b** were collected separately for subsequent characterization. Thus, two retentates and two permeates samples were obtained from the ultrafiltration steps: a retentate (R-NF-E1) and a permeate (P-NF-E1) from the disk module with one gear motor **10a,** and a retentate (R-NF-E2) and a permeate (P-NF-E2) from the second module where two motors were gearing the disk tube **10b.**

Permeates from the ultrafiltration modules **10a** and **10b** then flowed to the first module of reverse osmosis **16** (Brackishwater, TM720D-400, Toray, Japan) at a pressure of 1,200-1,600 kPa and a temperature of 20-22°C. For the first step of the reverse osmosis, the retentate was recirculated at a flow of 12,000 L h⁻¹ via the recycle loop **25** in order to improve recovery. Retentate from the first stage of reverse osmosis (R-RO-S1) was collected in a storage tank **20,** referred as an NK liquid mineral fertilizer on the basis of its composition. A second step of reverse osmosis filtration without the retentate recycle loop 25 was applied to the permeate of the first step of reverse osmosis (P-RO-S1) using to second reverse osmosis module **18.** The inflow of the second step of reverse osmosis (Brackishwater, TM720D-400, Toray, Japan) was conducted at a pressure of 800-1000 kPa and a temperature of 20-22°C. Retentate from the second step of reverse osmosis (R-RO-S2) was collected in a storage tank **22** and then mixed with the retentate R-RO-S1 and is the aqueous composition of humic substances, The water body recovered from the second reverse osmosis step (P-RO-S2) was considered as potentially safe to discharge into surface waters.

Samples of process streams were taken along the different steps. Samples of 10 L were taken for each stream at two different times and were collected in high density polyethylene (HDPE) canisters and transported to the laboratory for analysis on the same day. The following process fractions were sampled: untreated digestate (DIG), a solid fraction (SF-DIG) and a liquid fraction (LF-DIG) of digestate obtained from the screw press **5,** retentate (R-NF) and permeate (P-NF) from the ultrafiltration steps, retentate (R-RO-S1) and permeate (P-RO-S1) from the first reverse osmosis step and finally, retentate (R-RO-S2) and permeate (PRO-S2) from the second reverse osmosis step. R-NF and P-NF were collected separately from the two distinct disk modules **10a** and **10b:** permeate (P-NF-E1) and retentate (R-NF-E1) from the ultrafiltration geared by one motor **10a** and the permeate (P-NF-E2) and retentate (R-NF-E2) from the ultrafiltration module equipped with two gear motors **10b.**

Fractionation efficiency was assessed by determining the flow and mass balances of water, nutrients, organic matter and minerals. The fertilizer potential of each concentrated fraction was evaluated as follows:

### 1. Analytical methods

The total solid (TS) and ash contents were determined as residual weight after 48 h drying at 105°C and 3 h at 550°C, respectively.

Volatile solids (VS) were determined by subtracting the ashes from the total solid content.

Conductivity and pH were determined potentiometrically using a Phenomenal^{®} PC 5000L equipped with a CO11^{®} conductimetry probe and a SenTix^{®} phenomenal 111 pH probe (VWR, Radnor, USA), respectively. For solid samples, pH and conductivity were determined after equilibration for 1 h in deionized water at a 1:1 weight water/sample ratio.

The total nitrogen content (TKN) was determined using a Kjeltec Vapodest^{®} 20s distillation unit (Gerhardt, Köningswinter, Germany) after the digestion of samples in sulphuric acid with a Turbotherm^{®} TTA (Gerhardt, Köningswinter, Germany).

Total ammonia nitrogen (TAN) was determined by distilling approximatively 2 g of the sample without prior acid digestion. The ammonia captured in the distillate was titrated with 0.05 mol HCl/L in the presence of the methyl red-bromocresol green mixed indicator.

The total phosphorus and phosphate content and chemical oxygen demand were determined photometrically using Hach-Lange test kits (Dr Bruno Lange GmBh, Düsseldorf).

Total suspended solids (TSS) were determined by filtrating a known volume of the sample on a glass fiber filter of 1.2 µm pore size and then followed by drying and weighing the filter.

Potassium was analyzed using Inductively Coupled Plasma Mass Spectrometry (ICP-MS) (ICP-MS 7900, Agilent Technologies, Santa Clara, California, USA) after the acidic mineralization of samples. Thick samples were previously dried at 105°C and then ground through a 1 mm mesh for potassium and phosphorus analysis.

### 2. Characterization of the fulvic acid-like substances

Fulvic-like substances were characterized in two of the obtained fractions:
1) the liquid fraction resulting of the step of solid/liquid separation (Initial sample), and
2) the retentate of the first reverse osmosis step.

Both solutions were first acidified to pH 1 and then centrifuged to remove humic-like substances (HLA) from the solution. Fulvic-like substances (FAL) in the supernatant (FAL solutions) were then characterized in different separation steps by adsorbing the hydrophilic and hydrophobic fractions on a XAD-8 resin (Superlite^{®} DAX-8, referred as polymethylmethacrylate resin, Supelco).

### 3. Fluorescence spectroscopy

2D fluorescence analysis (Perkin Elmer LS55, FL Winlab) was performed on the liquid fraction after solid/liquid separation and on the final sample after filtration to confirm the presence of humic substances in the digestate extracts. 2D fluorescence analysis was also performed on the fraction obtained during the characterization of the fulvic acid-like substances. 2D fluorescence spectra were obtained after dilution of the liquid extracts. The range of both excitation wavelengths varied from 200 nm to 700 nm and the emission wavelengths range was from 280 nm to 700 nm. Excitation step and emission were 5 nm. Results were collected into tables and 2D graphs were plotted at specific excitation wavelengths.

### 4. Results

The initial solution contained a dry matter content of 3.78% with an organic content of 23,400 mg/L

The FAL solutions contained a dry matter content of 1.125 % with an organic content of 2,790 mg/L.

The organic and mineral compositions of the different fractions obtained are respectively given in the following Tables 1 and 2:

**TABLE 1: Organic compositions of the fractions**

| Sample type | Unit | DIG | LF-DIG | SF-DIG | R-NF-E1 | R-NF-E2 | P-NF-E1 | P-NF-E2 | R-RO-S1 |
|---|---|---|---|---|---|---|---|---|---|
| pH | - | 7.901 | 7.982 | 8.339 | 7.828 | 7.941 | 8.064 | 8.04 | 8.018 |
| Conductivity | mS cm⁻¹ | 29,1 | 30,8 | 2.08 | 25,9 | 27,3 | 30,9 | 30,9 | 38,3 |
| TS | %ww | 4.62 ± 0.34 | 3.78 ± 0.01 | 31.14 ± 0.46 | 7.575 ± 0.006 | 7.341 ± 0.003 | 0.834 ± 0.001 | 0.850 ± 0.001 | 1.125 ± 0.003 |
| VS | %TS | 66.0 ± 0.5 | 61.9 ± 1.0 | 85.1 ± 0.3 | 65.8 ± 0.3 | 65.6 ± 0.0 | 21.3 ± 0.5 | 22.4 ± 0.3 | 24.8 ± 0.5 |
| Ashes | %TS | 34.0 ± 0.5 | 38.1 ± 1.0 | 14.9 ± 0.3 | 34.2 ± 0.3 | 34.4 ± 0.0 | 78.7 ± 0.5 | 77.6 ± 0.3 | 75.2 ± 0.5 |
| TKN | Mg N kg⁻¹ | 4910 ± 170 | 4680 ± 16 | 7528 ± 67 | 6375 ± 46 | 6214 ± 72 | 3359 ± 30 | 3434 ± 24 | 4307 ± 11 |
| TAN | mg kg⁻¹ | 3965 ± 533 | 3646 ± 308 | 3729 ± 453 | 4494 ± 340 | 4586 ± 280 | 3217 ± 19 | 3251 ± 29 | 4120 ± 12 |
| Total P | P mg kg⁻¹ | 495 ± 18 | 387 ± 15 | | 998 ± 44 | 880 ± 43 | 87 ± 5 | 87 ± 6 | 123 ± 4 |
| Total P | P₂O₅ mg kg⁻¹ WW | 1136,1 | 886,9 | 3393 ± 616 | 2289,8 | 2017,6 | 200,2 | 199,6 | 282,9 |
| Total P | P₂O₅ g kg⁻¹ TS | 24,00 | 23,49 | | 30,23 | 27,48 | 23,99 | 23,48 | 25,15 |
| P0₄-P | PO₄-P mg L⁻¹ | 172 ± 2 | 164 ± 2 | | 165 ± 3 | 194 ± 3 | 78 ± 1 | 79 ± 1 | 112 ± 1 |
| Total K₂O | mg kg⁻¹ WW | 2559 ± 163 | 2980 ± 111 | 2640 ± 54 | 2619 ± 18 | 2661 ± 14 | 2263 ± 32 | 2245 ± 66 | 2834 ± 37 |
| Total CaO | mg kg⁻¹ WW | 3301 ± 290 | 2462 ± 64 | 10708 ± 714 | 5816 ± 55 | 5691 ± 62 | 98 ± 6 | 101.98 ± 1.59 | 113.50 ± 1.55 |

**TABLE 2a: Mineral composition of the fractions (Ca, Na, Mg, Fe, Mn, Zn, and Co)**

| Fractions | Units | Ca | Na | Mg | Fe | Mn | Zn | Co |
|---|---|---|---|---|---|---|---|---|
| DIG | µg g-¹TS | 51,056 ± 4,480 | 30,605 ± 2,198 | 4,735 ± 500 | 5,802 ± 391 | 386.1 ± 33.2 | 260.4 ± 15.7 | 2.7 ± 0.2 |
| SF-DIG | µg g-¹TS | 24,573 ± 1,639 | 4,457 ± 85 | 4,428 ± 393 | 2,739 ± 126 | 195.3 ± 13.1 | 111.2 ± 1.6 | 1.3 ± 0.0 |
| LF-DIG | µg g-¹TS | 46,540 ± 1,217 | 44,456 ± 1,786 | 3,928 ± 161 | 6,447 ± 257 | 438.7 ± 18.9 | 339.9 ± 15.6 | 3.5 ± 0.1 |
| R-NF-E1 | µg g-¹TS | 54,865 ± 520 | 19,824 ± 142 | 5,467 ± 29 | 7,312 ± 61 | 461.5 ± 13.7 | 326.2 ± 5.7 | 3.2 ± 0.0 |
| R-NF-E2 | µg g-¹TS | 55,394 ± 601 | 21,654 ± 434 | 5,520 ± 174 | 7,362 ± 88 | 477.5 ± 30.1 | 337.3 ± 10.3 | 3.1 ± 0.1 |
| P-NF-E1 | µg L⁻¹ | 69,990 ± 4,176 | 967,855 ± 9,823 | 7,100 ± 535 | 363 ± 4 | 84.5 ± 8.5 | 84.2 ± 1.4 | 29.6 ± 1.0 |
| P-N F-E2 | µg L⁻¹ | 72,872 ± 1,138 | 950,735 ± 21,149 | 6,849 ± 438 | 534 ± 21 | 99.1 ± 4.0 | < 83 | 33.1 ± 0.9 |
| R-RO-S1 | µg L⁻¹ | 81,109 ± 1,111 | 118,482 6 ± 18,105 | 6,742 ± 652 | 977 ± 15 | 74.4 ± 6.8 | < 83 | 55.8 ± 0.8 |
| P-RO-S1 | µg L⁻¹ | < 4,166 | 328,108 ± 23,175 | < 4,175 | < 83 | < 16.7 | < 83 | < 4.2 |
| R-RO-S2 | µg L⁻¹ | 17,421 ± 315 | 910876 ± 24429 | < 4175 | < 83 | < 16.7 | < 83 | < 4.2 |
| P-RO-S2 | µg L⁻¹ | 4,620 ± 787 | 342335 ± 9487 | < 4175 | < 83 | < 16.7 | < 83 | < 4.2 |

**TABLE 2b: Mineral composition of the fractions (Cu, Se, Ni, Cr, Cd, and Pb)**

| Fractions | Units | Cu | Se | Ni | Cr | Cd | Pb |
|---|---|---|---|---|---|---|---|
| DIG | µg g⁻¹TS | 59.6 ± 3.5 | 0.8 ± 0.0 | 13.8 ± 0.9 | 25.0 ± 1.8 | 0.6 ± 0.1 | 6.8 ± 0.4 |
| SF-DIG | µg g⁻¹TS | 22.4 ± 0.6 | 0.5 ± 0.0 | 7.8 ± 0.2 | 16.5 ± 1.0 | 0.2 ± 0.0 | 3.3 ± 0.6 |
| LF-DIG | µg g⁻¹TS | 74.5 ± 3.7 | 1.0 ± 0.0 | 16.6 ± 0.6 | 26.6 ± 0.6 | 0.8 ± 0.0 | 7.9 ± 0.5 |
| R-NF-E1 | µg g⁻¹TS | 76.1 ± 0.3 | 0.9 ± 0.1 | 25.3 ± 1.0 | 51.2 ± 2.0 | 0.7 ± 0.0 | 9.1 ± 0.2 |
| R-NF-E2 | µg g⁻¹TS | 78.0 ± 0.5 | 0.9 ± 0.0 | 20.2 ± 1.8 | 39.7 ± 5.2 | 0.7 ± 0.0 | 9.1 ± 0.3 |
| P-NF-E1 | µg L⁻¹ | < 16.7 | < 41.7 | 102.6 ± 27.4 | 16.9 ± 0.3 | < 4.2 | < 4.2 |
| P-NF-E2 | µg L⁻¹ | < 16.7 | < 41.7 | 101.7 ± 2.3 | 18.0 ± 0.3 | < 4.2 | < 4.2 |
| R-RO-S1 | µg L⁻¹ | < 16.7 | < 41.7 | 163.6 ± 1.7 | 26.2 ± 0.7 | < 4.2 | < 4.2 |
| P-RO-S1 | µg L⁻¹ | < 16.7 | < 41.7 | 4.2 ± 0.0 | < 16.7 | < 4.2 | < 4.2 |
| R-RO-S2 | µg L⁻¹ | < 16.7 | < 41.7 | 16.2 ± 2.0 | < 16.7 | < 4.2 | < 4.2 |
| P-RO-S2 | µg L⁻¹ | < 16.7 | < 41.7 | 5.1 ± 1.7 | < 16.7 | < 4.2 | < 4.2 |

The concentrations of fulvic acid-like substances in the initial solution of the liquid fraction of the liquid/solid separation step and in the retentate of the reverse osmosis (FAL solutions) are given in Figure 2 annexed. On this figure, the concentration of fulvic-like substances ("dissolved organic compounds" : DOC in mg/ml) is given as a function of the different fractions: FA0 (solution before the extraction, acidified at pH 1 and centrifuged (10,000 rpm, 15 min)) and hydrophilic fulvic acids (FA1 and FA2) and hydrophobic fulvic acids (FA3 and FA4). On this figure, white bars correspond to the concentrations measured in the liquid fraction after the solid-liquid separation and black bars correspond to the concentration measured in the retentates of the reverse osmosis steps.

The FAL solutions contained 1,397 mg DOC/L and represents around 50% of the total organic carbon (TOC calculated in mg/L) whereas the initial product contained 2,018 mg DOC/L of FAL substances, representing 8.6% of the total organic carbon. Results showed that the proportion of fulvic acid like substances is increased in the FAL solutions in comparison with the initial solution due to the removal of other organic matter throughout the process as shown in the following Table 3:

**TABLE 3**

| Sample | TOC calculated (mg/L) | DOC measured after acidification and centrifuge (mg/L) | Percentage (%) |
|---|---|---|---|
| Initial solution | 23,400 | 2,018 | 8.6% |
| FAL solutions | 2,790 | 1,397 | 50% |

Comparative results between the initial and FAL solutions showed that 67% of the fulvic acid like substances present in the initial solution have been collected in the FAL solution as reported in the following Table 4:

**TABLE 4**

| **Sample** | | **DOC (mg/L)** | **Volume (L)** | **mass (mg)** | **Percent (%)** |
|---|---|---|---|---|---|
| **Initial Solution** | FA0 | 2,018 | 0.02 | 40.36 | - |
| | FA1 | 513 | 0.04 | 20.52 | 51 |
| | FA2 | 264 | 0.013 | 3.432 | 9 |
| | FA3 | 131 | 0.01 | 1.31 | 3 |
| | FA4 | 1,793 | 0.004 | 7.172 | 18 |
| | Loss/retained | - | - | 7.926 | 20 |
| **FAL Solutions** | FA0 | 1,397 | 0.02 | 27.94 | - |
| | FA1 | 257 | 0.04 | 10.28 | 37 |
| | FA2 | 152 | 0.013 | 1.976 | 7 |
| | FA3 | 158 | 0.01 | 1.58 | 6 |
| | FA4 | 2,398 | 0.004 | 9.592 | 34 |
| | Loss/retained | - | - | 4.512 | 16 |

The distribution in term of hydrophobic/hydrophilic FAL is also similar and so the loss of 33% of the FAL is mostly due to a systemic loss of liquid fraction during the different processes rather than the specific structure of some FAL present in solution.

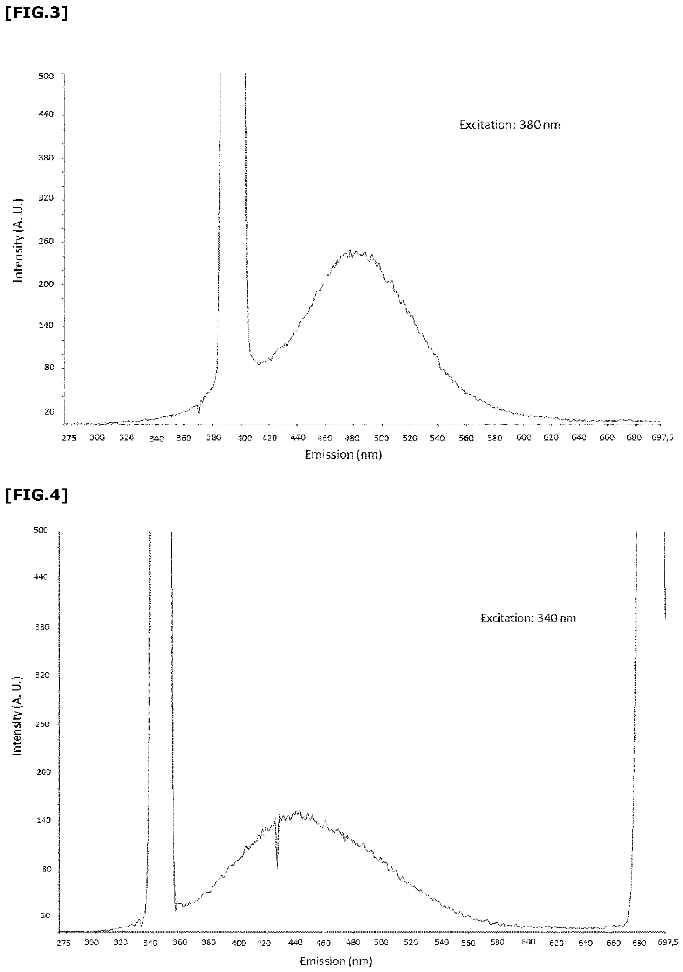

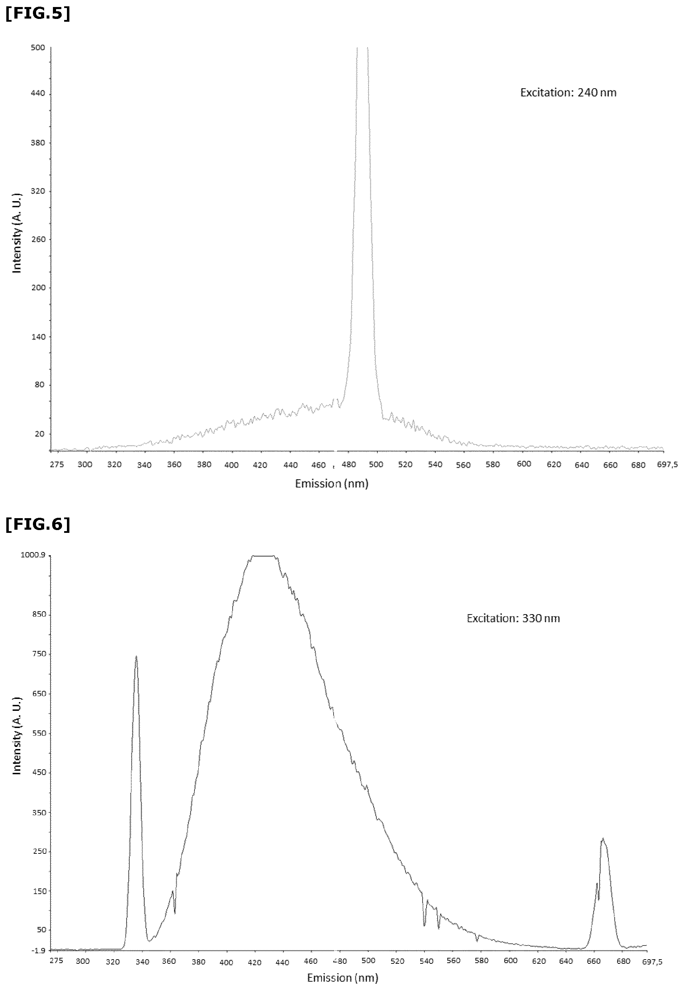

For the initial solution, results of 2D fluorescence have been obtained after a dilution 1/75. The corresponding graphs are given on figures 3 to 5 annexed on which intensity in arbitrary units (A. U.) is expressed as a function of the emission wave length (nm). Figure 3 corresponds to the peaks obtained with an excitation at 380 nm, figure 4 corresponds to the peaks obtained with an excitation at 340 nm and figure 5 corresponds to the peaks obtained at an excitation at 240 nm.

It can be seen on figure 3 that a large peak was observed at the excitation wavelength of 380 nm with an emission peak at (Ex/Em 460-520 nm corresponding to HAL substances. Two smaller peaks were also detected at the excitation wavelength of 340 nm with an emission peak at 420-460 nm (figure 4), related to HAL substances, and at the excitation wavelength of 240 nm with an emission peak at 440-480 nm (figure 5), related to FAL substances.

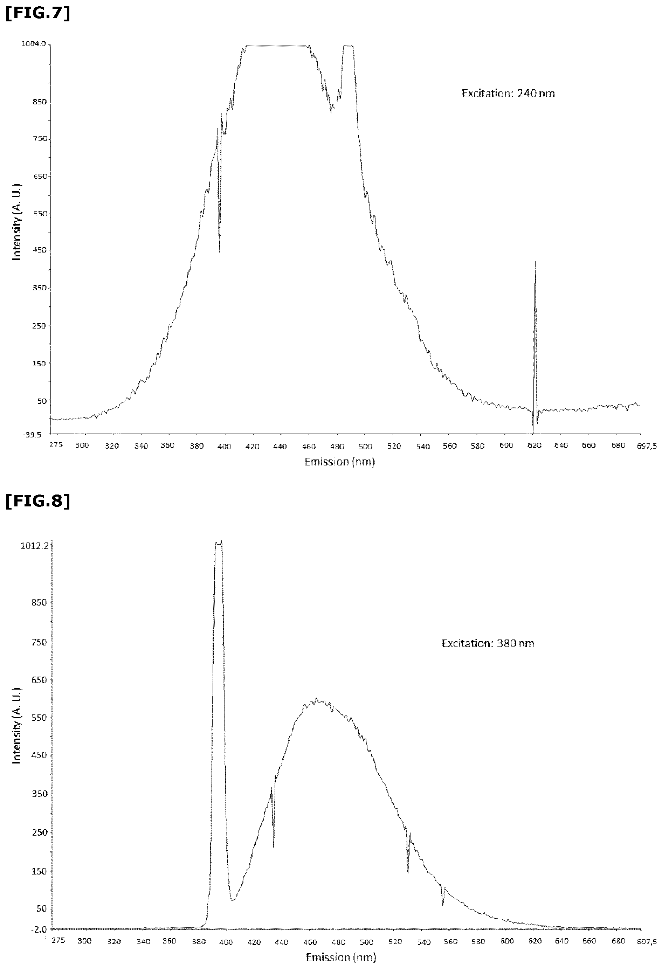

For the FAL solutions, the results of 2D fluorescence have been obtained after a dilution 1/100. The corresponding graphs are given on figures 6 to 8 on which intensity in arbitrary units (A. U.) is expressed as a function of the emission wave length (nm). Figure 6 corresponds to the peaks obtained with an excitation at 330 nm, figure 7 corresponds to the peaks obtained with an excitation at 240 nm and figure 8 corresponds to the peaks obtained at an excitation at 380 nm.

Two large peaks were observed at the excitation wavelength of 330 nm with an emission peak at 410-450 nm (figure 6), corresponding to the region HAL substance and at the excitation wavelength of 240 nm with an emission peak at 410-460 nm (figure 7) corresponding to FAL substances. A smaller peak was also observed at the excitation wavelength of 380 nm with an emission peak at 450-480 nm, related to HAL substances (figure 8).

The three peaks observed in the initial solution are also observed in the FAL solution confirming the extraction of HAL and FAL in the retentate of the reverse osmosis. It is also important to notice the change in the relative intensity between the three peaks. The FAL/HAL peaks are more dominant in the FAL solution than in the initial solution.

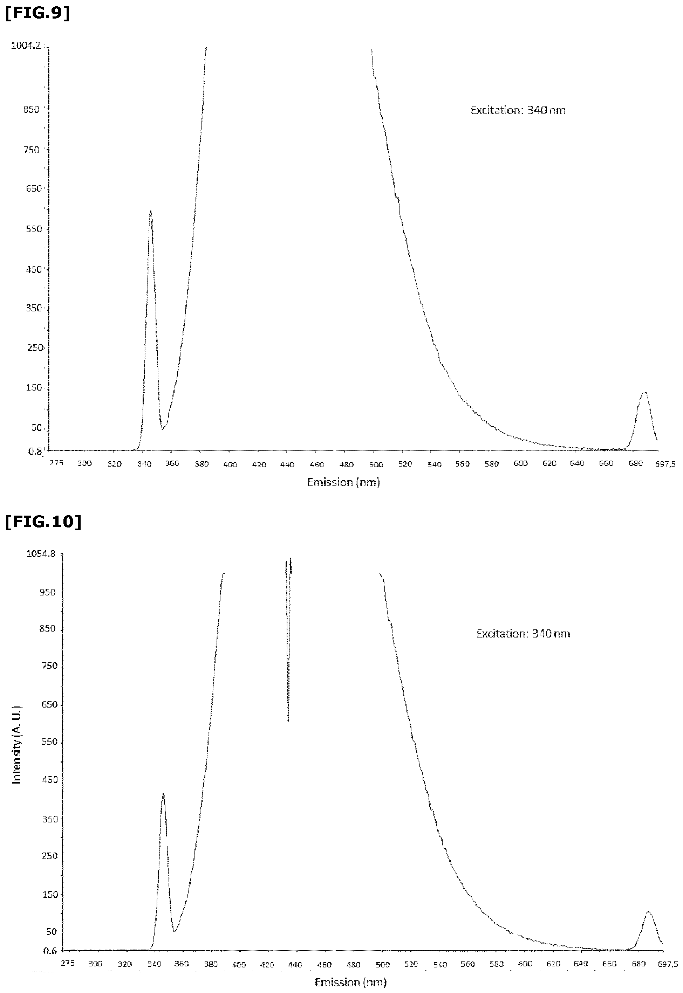

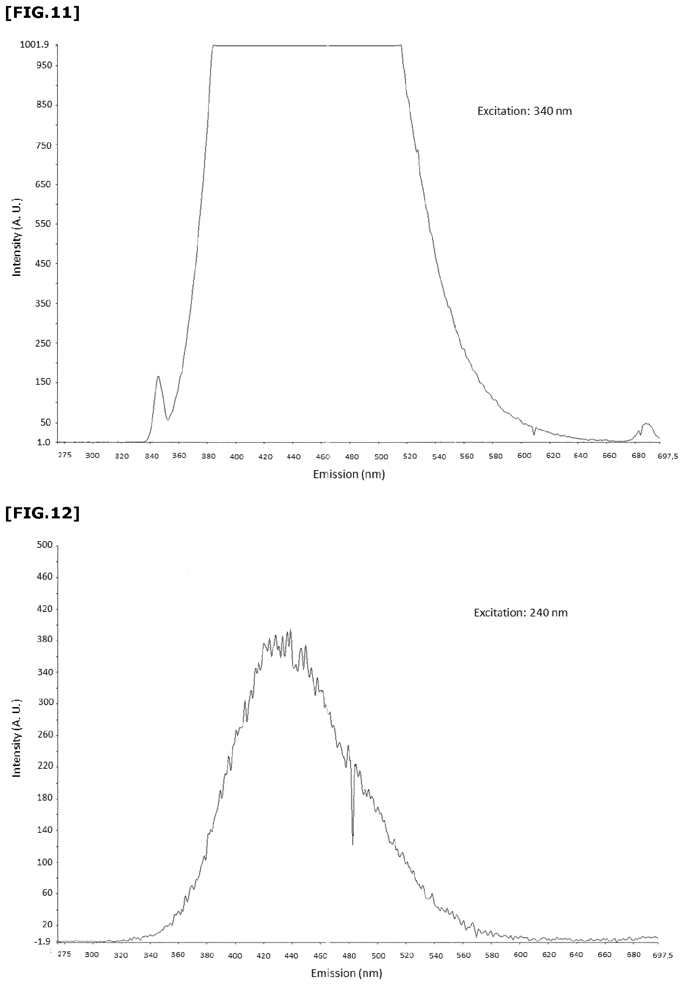

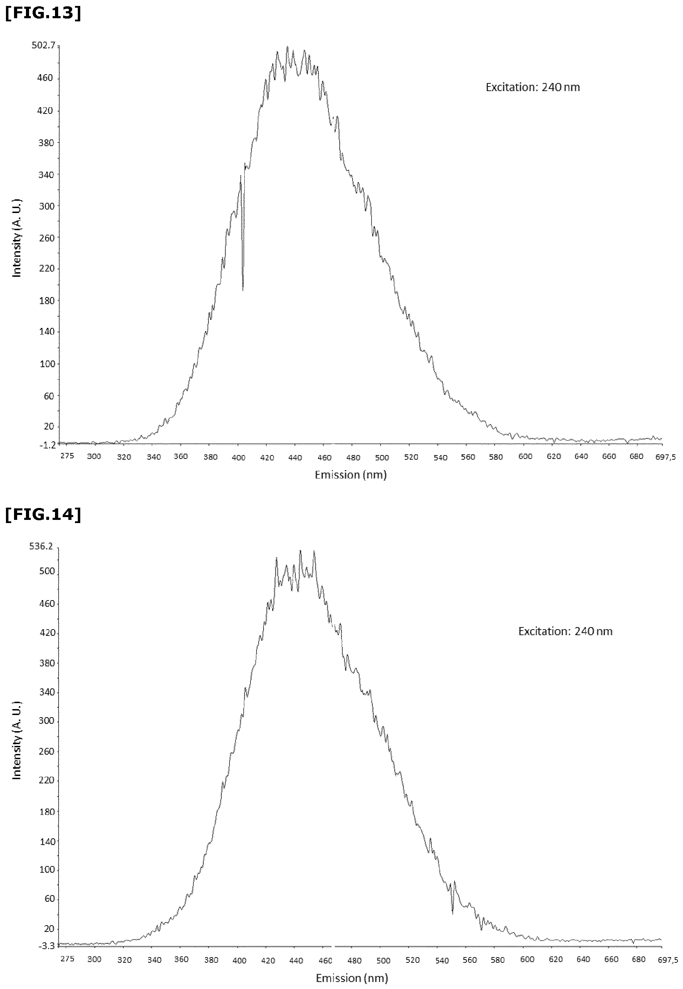

The presence of FAL has also been checked in the FA1 to FA3 fractions of the FAL solution. The corresponding graphs are given on figures 9 to 14 on which intensity in arbitrary units (A. U.) is expressed as a function of the emission wave length (nm). Figure 9 corresponds to the peaks obtained for fraction FA1 with an excitation at 340 nm, figure 10 corresponds to the peaks obtained for fraction FA2 with an excitation at 340 nm, figure 11 corresponds to the peaks obtained for fraction FA3 with an excitation at 340 nm, figure 12 corresponds to the peaks obtained for fraction FA1 with an excitation at 240 nm, figure 13 corresponds to the peaks obtained for fraction FA2 with an excitation at 240 nm and figure 14 corresponds to the peaks obtained for fraction FA3 with an excitation at 240 nm.

The results reported on these figures show a large emission peak present in the region HAL, centred at 450 nm for an excitation wavelength of 340 nm (figures 9-11), and a smaller emission peak present in the FAL region, centred at 440 nm for an excitation wavelength of 240 nm (figures 12-14). This confirms the presence of FAL in the final solution and the correspondence of FA1-FA3 fractions collected during the characterisation experiment. The peak present in the region (Ex/Em) 340/450 nm in the initial and FAL solutions is also present in the extracted solutions and so it could be more related to larger fulvic acid like substances rather than humic acid like substances.

## Claims

1. A method for the production of an aqueous liquid composition comprising at least humic substances dissolved therein, said process comprising at least the following steps:
(i) an anaerobic digestion of organic matters comprising incubating said organic matters, in an anaerobic atmosphere, in the presence of an anaerobic microorganism population chosen in the group comprising humic acid-producing microorganisms, fulvic acid-producing microorganisms and mixtures thereof, for a period of time of at least 40 days, to produce a liquid sludge comprising dissolved humic substances and solid particles;
(ii) a mechanical separation of the solid particles from the humic substances with a solid-liquid separator to obtain a solid fraction and a liquid fraction comprising at least said humic substances and said microorganism population;
(iii) ultrafiltration of said liquid fraction on an ultrafiltration membrane having a molecular weight cut off selected in the range of 25 to 1,000 kDa inclusively, for removing colloidal organic matters and inorganic precipitates from said liquid fraction and obtaining a liquid permeate comprising humic substances;
(iv) concentrating said liquid permeate comprising humic substances using a reverse osmosis membrane to obtain a retentate in the form of an aqueous liquid composition comprising at least humic substances dissolved therein,
and wherein each of steps (i) to (iv) is carried out at a pH ≥ 2.

2. The method according to claim 1, wherein said organic matters are selected in the group comprising animal slurry, manure, crops, crop residues, food industry waste, agriculture and gardening waste, cardboard, cellulosic material, coffee grounds, algae, and mixtures thereof.

3. The method according to claim 1 or 2, wherein said anaerobic microorganism population comprises mesophilic bacteria and said step (i) is carried out at a temperature selected in the range of 18 to 45°C inclusively.

4. The method according to claim 1 or 2, wherein said anaerobic microorganism population comprises thermophilic bacteria and said step (i) is carried out at a temperature selected in the range of 45 to 90°C inclusively.

5. The method according to any one of claim 1 to 4, wherein said method further comprises after step (ii) of mechanical separation and before step (iii) of ultrafiltration, an additional step of heating the liquid fraction issued from step (ii) to a temperature ranging between 20 and 40°C inclusively.

6. The method according to any one of claims 1 to 5, wherein said ultrafiltration filtration membrane has a molecular weight cut off ranging from 25 to 100 kDa inclusively.

7. The method according to any one of claims 1 to 6, wherein said reverse osmosis membrane has a molecular weight cut off ranging from about 50 to 200 Da inclusively.

8. The method according to any one of claims 1 to 7, wherein step (iv) is carried out at a pressure ranging from 800 to 1,600 kPa inclusively.

9. The method according to any one of claims 1 to 8, wherein the liquid permeate obtained at step (iii) is passed through said reverse osmosis membrane at least twice.

10. The method according to any one of claims 1 to 9, wherein said method comprises, after step (iv) at least one additional step (iv') of further concentrating the retentate obtained at step (iv) by drying and/or evaporation.

11. The method according to claim 10, wherein said retentate is evaporated at a pressure selected in the range of 10 to 30 kPa inclusively, and at a temperature selected in the range of 70 to 95°C inclusively.

12. The method according to any one of claims 1 to 11, wherein said method comprises, after step (iv) or after step (iv') when step (iv') is carried out, a further step of separation of humic acids from fulvic acids by acidification of the retentate at a pH ≤ 1.5 to precipitate humic acids.

13. The method according to any one of claims 1 to 12, wherein the solid fraction issued from step (ii) comprises solid particles of a ligno-cellulosic material, and further wherein, said solid particles are exposed to a thermal alkali-treatment to at least partially degrade said ligno-cellulosic material and solubilize organic matters.

14. The method according to claim 13, wherein the solid particles issued from said thermal alkali-treatment are mixed with the organic matters of step (i) to be anaerobically digested once again.

15. The method according to any one of claims 13 and 14, wherein the thermal alkali-treatment is carried out at a temperature selected in the range of 20 to 80°C inclusively.

## Patentansprüche

1. Verfahren zur Herstellung einer wässrigen flüssigen Zusammensetzung, die wenigstens darin gelöste Huminstoffe umfasst, wobei das Verfahren wenigstens die folgenden Schritte umfasst:
(i) eine anaerobe Verdauung organischer Stoffe, umfassend das Inkubieren der organischen Stoffe in einer anaeroben Atmosphäre in Gegenwart einer Population anaerober Mikroorganismen, die aus der Gruppe ausgewählt sind, die aus Huminsäure erzeugenden Mikroorganismen, Fulvinsäure erzeugenden Mikroorganismen und Gemischen davon besteht, während eines Zeitraums von wenigstens 40 Tagen unter Erzeugung eines flüssigen Schlamms, der gelöste Huminstoffe und feste Teilchen umfasst;
(ii) eine mechanische Abtrennung der festen Teilchen von den Huminstoffen mit einem Fest-Flüssig-Separator, wobei man eine feste Fraktion und eine flüssige Fraktion, die wenigstens die Huminstoffe und die Mikroorganismenpopulation umfasst, erhält;
(iii) Ultrafiltration der flüssigen Fraktion auf einer Ultrafiltrationsmembran mit einer Molekulargewichtsausschlussgrenze, die im Bereich von 25 bis 1000 kDa einschließlich ausgewählt ist, um kolloidale organische Stoffe und anorganische Niederschläge aus der flüssigen Fraktion zu entfernen und ein flüssiges Permeat zu erhalten, das Huminstoffe umfasst;
(iv) Einengen des flüssigen Permeats, das Huminstoffe umfasst, unter Verwendung einer Umkehrosmosemembran, wobei man ein Retentat in Form einer wässrigen flüssigen Zusammensetzung, die wenigstens darin gelöste Huminstoffe umfasst, erhält,
und wobei jeder der Schritte (i) bis (iv) bei einem pH-Wert ≥ 2 durchgeführt wird.

2. Verfahren gemäß Anspruch 1, wobei die organischen Stoffe aus der Gruppe ausgewählt sind, die aus Gülle, Mist, Feldfrüchten, Ernterückständen, Abfällen aus der Lebensmittelindustrie, Abfällen aus Landwirtschaft und Gartenbau, Karton, Cellulosematerial, Kaffeesatz, Algen und Gemischen davon besteht.

3. Verfahren gemäß Anspruch 1 oder 2, wobei die Population anaerober Mikroorganismen mesophile Bakterien umfasst und Schritt (i) bei einer Temperatur durchgeführt wird, die aus dem Bereich von 18 bis 45°C einschließlich ausgewählt ist.

4. Verfahren gemäß Anspruch 1 oder 2, wobei die Population anaerober Mikroorganismen thermophile Bakterien umfasst und Schritt (i) bei einer Temperatur durchgeführt wird, die aus dem Bereich von 45 bis 90°C einschließlich ausgewählt ist.

5. Verfahren gemäß einem der Ansprüche 1 bis 4, wobei das Verfahren weiterhin nach Schritt (ii) der mechanischen Abtrennung und vor Schritt (iii) der Ultrafiltration einen zusätzlichen Schritt umfasst, in dem die in Schritt (ii) erhaltene flüssige Fraktion auf eine Temperatur im Bereich von 20 bis 40°C einschließlich erhitzt wird.

6. Verfahren gemäß einem der Ansprüche 1 bis 5, wobei die Ultrafiltrationsmembran eine Molekulargewichtsausschlussgrenze im Bereich von 25 bis 100 kDa einschließlich aufweist.

7. Verfahren gemäß einem der Ansprüche 1 bis 6, wobei die Umkehrosmosemembran eine Molekulargewichtsausschlussgrenze im Bereich von etwa 50 bis 200 Da einschließlich aufweist.

8. Verfahren gemäß einem der Ansprüche 1 bis 7, wobei Schritt (iv) unter einem Druck im Bereich von 800 bis 1600 kPa einschließlich durchgeführt wird.

9. Verfahren gemäß einem der Ansprüche 1 bis 8, wobei das in Schritt (iii) erhaltene flüssige Permeat wenigstens zweimal durch die Umkehrosmosemembran geleitet wird.

10. Verfahren gemäß einem der Ansprüche 1 bis 9, wobei das Verfahren nach Schritt (iv) wenigstens einen zusätzlichen Schritt (iv') umfasst, in dem das in Schritt (iv) erhaltene Retentat durch Trocknen und/oder Eindampfen weiter eingeengt wird.

11. Verfahren gemäß Anspruch 10, wobei das Retentat unter einem Druck, der im Bereich von 10 bis 30 kPa einschließlich ausgewählt ist, und bei einer Temperatur, die im Bereich von 70 bis 95°C einschließlich ausgewählt ist, eingedampft wird.

12. Verfahren gemäß einem der Ansprüche 1 bis 11, wobei das Verfahren nach Schritt (iv) oder nach Schritt (iv'), wenn Schritt (iv') durchgeführt wird, einen weiteren Schritt umfasst, in dem Huminsäuren durch Ansäuerung des Retentats auf einen pH-Wert ≤ 1,5 von Fulvinsäuren getrennt werden, wobei Huminsäuren ausgefällt werden.

13. Verfahren gemäß einem der Ansprüche 1 bis 12, wobei die in Schritt (ii) erhaltene feste Fraktion feste Teilchen aus einem Lignocellulosematerial umfasst und wobei weiterhin die festen Teilchen einer Wärme-Alkali-Behandlung unterzogen werden, wobei das Lignocellulosematerial wenigstens teilweise abgebaut wird und organische Stoffe solubilisiert werden.

14. Verfahren gemäß Anspruch 13, wobei die in der Wärme-Alkali-Behandlung erhaltenen festen Teilchen mit den organischen Stoffen aus Schritt (i) gemischt werden, um sie noch einmal einer anaeroben Verdauung zu unterziehen.

15. Verfahren gemäß einem der Ansprüche 13 bis 14, wobei die Wärme-Alkali-Behandlung bei einer Temperatur durchgeführt wird, die aus dem Bereich von 20 bis 80°C einschließlich ausgewählt ist.

## Revendications

1. Procédé de production d'une composition liquide aqueuse comprenant au moins des substances humiques qui y sont dissoutes, ledit procédé comprenant au moins les étapes suivantes :
(i) une digestion anaérobie de matières organiques comprenant l'incubation desdites matières organiques, en atmosphère anaérobie, en présence d'une population de microorganismes anaérobies choisis dans le groupe comprenant les microorganismes producteurs d'acide humique, les microorganismes producteurs d'acide fulvique et leurs mélanges, pendant une période de temps d'au moins 40 jours, pour produire une boue liquide comprenant des substances humiques dissoutes et des particules solides ;
(ii) une séparation mécanique des particules solides des substances humiques avec un séparateur solide-liquide pour obtenir une fraction solide et une fraction liquide comprenant au moins lesdites substances humiques et ladite population de microorganismes ;
(iii) une ultrafiltration de ladite fraction liquide sur une membrane d'ultrafiltration ayant un seuil de coupure de la masse moléculaire choisi dans la gamme de 25 à 1000 kDa inclusivement, pour éliminer les matières organiques colloïdales et les précipités inorganiques de ladite fraction liquide et obtenir un perméat liquide comprenant des substances humiques ;
(iv) concentrer ledit perméat liquide comprenant des substances humiques en utilisant une membrane d'osmose inverse pour obtenir un rétentat sous la forme d'une composition liquide aqueuse comprenant au moins des substances humiques qui y sont dissoutes,
et dans lequel chacune des étapes (i) à (iv) est réalisée à un pH ≥ 2.

2. Procédé selon la revendication 1, dans lequel lesdites matières organiques sont sélectionnées dans le groupe comprenant le lisier animal, le fumier, les cultures, les résidus de récolte, les déchets de l'industrie alimentaire, les déchets agricoles et de jardinage, le carton, la matière cellulosique, le marc de café, les algues, et leurs mélanges.

3. Procédé selon la revendication 1 ou 2, dans lequel ladite population de microorganismes anaérobies comprend des bactéries mésophiles et ladite étape (i) est réalisée à une température choisie dans la gamme de 18 à 45°C inclusivement.

4. Procédé selon la revendication 1 ou 2, dans lequel ladite population de microorganismes anaérobies comprend des bactéries thermophiles et ladite étape (i) est réalisée à une température choisie dans la gamme de 45 à 90°C inclusivement.

5. Procédé selon l'une quelconque des revendications 1 à 4, dans lequel ledit procédé comprend en outre après l'étape (ii) de séparation mécanique et avant l'étape (iii) d'ultrafiltration, une étape supplémentaire de chauffage de la fraction liquide issue de l'étape (ii) à une température comprise entre 20 et 40°C inclusivement.

6. Procédé selon l'une quelconque des revendications 1 à 5, dans lequel ladite membrane d'ultrafiltration a un seuil de coupure de la masse moléculaire allant de 25 to 100 kDa inclusivement.

7. Procédé selon l'une quelconque des revendications 1 à 6, dans lequel ladite membrane d'osmose inverse a un seuil de coupure de la masse moléculaire allant d'environ 50 to 200 Da inclusivement.

8. Procédé selon l'une quelconque des revendications 1 à 7, dans lequel l'étape (iv) est réalisée à une pression allant de 800 à 1600 kPa inclusivement.

9. Procédé selon l'une quelconque des revendications 1 à 8, dans lequel le perméat liquide obtenu à l'étape (iii) est passé à travers ladite membrane d'osmose inverse au moins deux fois.

10. Procédé selon l'une quelconque des revendications 1 à 9, ledit procédé comprenant, après l'étape (iv) au moins une étape supplémentaire (iv') de concentration supplémentaire du rétentat obtenu à l'étape (iv) par séchage et/ou évaporation.

11. Procédé selon la revendication 10, dans lequel ledit rétentat est évaporé à une pression choisie dans la gamme de 10 à 30 kPa inclusivement, et à une température choisie dans la gamme de 70 à 95°C inclusivement.

12. Procédé selon l'une quelconque des revendications 1 à 11, ledit procédé comprenant, après l'étape (iv) ou après l'étape (iv') lorsque l'étape (iv') est réalisée, une étape supplémentaire de séparation des acides humiques des acides fulviques par acidification du rétentat à un pH ≤ 1,5 pour précipiter les acides humiques.

13. Procédé selon l'une quelconque des revendications 1 à 12, dans lequel la fraction solide récupérée à l'issue de l'étape (ii) comprend des particules solides de matière ligno-cellulosique, lesdites particules solides étant exposées à un traitement thermique alcalin pour dégrader au moins partiellement ledit matériau ligno-cellulosique et solubiliser les matières organiques.

14. Procédé selon la revendication 13, dans lequel les particules solides issues dudit traitement thermique alcalin sont mélangées avec les matières organiques de l'étape (i) pour être à nouveau digérées de façon anaérobie.

15. Procédé selon l'une quelconque des revendications 13 and 14, dans lequel le traitement thermique alcalin est effectué à une température sélectionnée dans la gamme de 20 à 80 °C inclusivement.
